# EUROPEAN PATENT APPLICATION

(11) **EP 2 009 948 A2**
(43) Date of publication of application: **31.12.2008**
(21) Application number: 08251199.9
(22) Date of filing: 28.03.2008
(51) Int. Cl.: H04Q 7/38

(54) **Client resource reservation in access networks for roaming**

(30) Priority: 29.06.2007 US 771509
(71) Applicant: Intel Corporation (INTEL), Santa Clara, CA 95052-8119 (US)
(72) Inventor: Kesavan, Vijay Sarathi, Sunnyvale, CA 94086 (US); Maciocco, Christian, Portland, Or 97229 (US)
(74) Representative: Beresford, Keith Denis Lewis

(57) **Abstract**

A method, apparatus, and system are disclosed. In one embodiment, the method includes granting a mobile device access to a network. The method also includes maintaining the mobile device state information on a network access device that is broadcasting the network, when the mobile device leaves the network, and also maintaining the network state information on the mobile device, when the mobile device leaves the network. Additionally, the method includes restoring the mobile device access to the network using the mobile device state information and the network state information.

## Description

### FIELD OF THE INVENTION

The invention relates to wireless networks. More specifically, the invention relates to maintaining state information between a client and a host in a wireless network after the client has left the host's wireless network.

### BACKGROUND OF THE INVENTION

Multi-radio platforms like an ultra mobile personal computer, a laptop computer, a personal digital assistant, a cell phone, or any other mobile computing device can connect to a network and switch seamlessly from one network to another to provide session continuity to the user. This is especially important for real-time applications like VoIP (Voice over Internet Protocol). Factors like user mobility, network availability, network characteristics, network load, application requirements, etc., can trigger a transition from one network to another, usually under the control of a network selection logic in the mobile device.

Transitioning between networks is a costly operation in terms of timing, operating system and network resources. Thus, the network selection logic usually tries to minimize unnecessary transitions.

Assuming that a device transitions from network A to network B, under certain unforeseen conditions the device might find that network A was a better network after all and might have to switch back to it. This can happen due to a variety of reasons. It is not always possible to know the characteristics of network B prior to connecting to network B. Certain service providers do not advertise their network characteristics. Additionally, dynamic parameters like network load, available bandwidth, etc. are also not available prior to connecting to the network.

Another reason to transition back from Network B to Network A is that while the network selection logic might determine a new network and switch to it, the service provider might choose to move the mobile device back to the previously connected network. This can happen when a network operator has the ability of controlling the network that a device is connected to.

Also, the network selection logic might use a speculative logic which can result in false positive network switch over. For example, a network transition may have happened when the need for it was not really there and so it's needed to switch back to the original network.

In the above scenarios the device switches from network A to B and then back to network A. These two network switches adversely affect applications - especially real-time and interactive applications like voice, real-time games, video, etc. The effects of these transitions are more severe when the adapter that is being used to connect to network A and network B is the same protocol (e.g. transitioning from one WLAN network to another WLAN network) as a make-before-break type of connection is usually not possible. Make-before-break connections occur when a mobile device is able to connect to a second network prior to disconnecting from a first network. If Network A and Network B are using the same protocol and only one of the network adapters' in the device can connect to both networks, then that network adapter in the mobile device must usually disconnect from one network prior to connecting to another network.
Additionally, in current mobile networks, when layer 2 (L2) connectivity of a mobile device client to a wireless network is lost, operators free up the resources allocated to the client because there is no way of knowing when or if the client will reconnect to the wireless network.

### BRIEF DESCRIPTION OF THE DRAWINGS

The present invention is illustrated by way of example and is not limited by the figures of the accompanying drawings, in which like references indicate similar elements, and in which:
**Figure 1** describes one embodiment of the environment where the reservation of wireless network client and host resources are performed.
**Figure 2** is a flow diagram of one embodiment of a process to maintain client and host resources in a roaming environment with multiple wireless networks.

### DETAILED DESCRIPTION OF THE INVENTION

Embodiments of a method, apparatus, and system to reserve network client and host resource information after the client has left the host's network are described. In the following description, numerous specific details are set forth. However, it is understood that embodiments may be practiced without these specific details. In other instances, well-known elements, specifications, and protocols have not been discussed in detail in order to avoid obscuring the present invention.

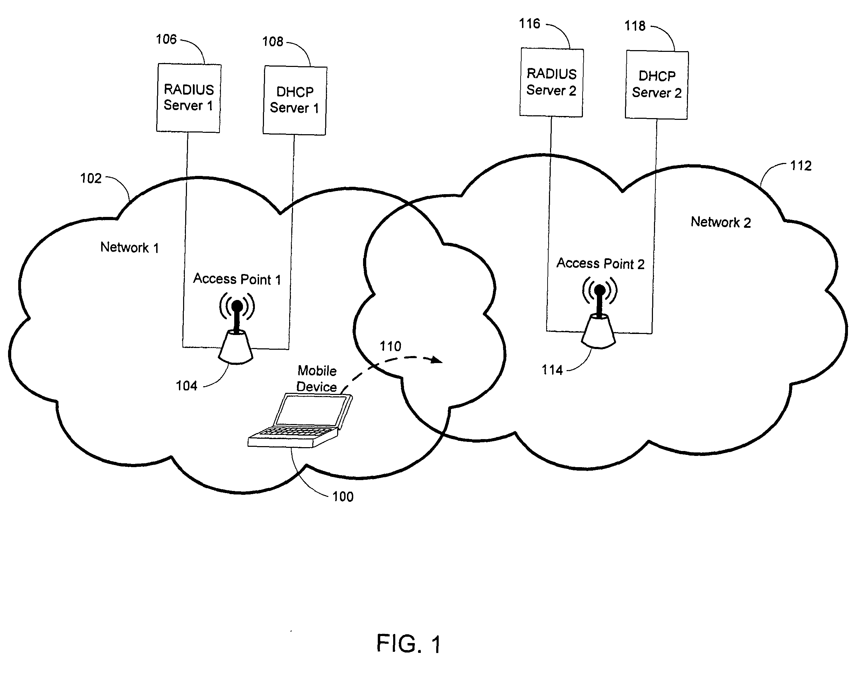

**Figure 1** describes one embodiment of the environment where the reservation of wireless network client and host resources are performed. Wireless to wireless network transitions are covered in the description below, but this should be viewed as an example and not in a restrictive sense (e.g. wireless to wired and back to wireless network transitions work as well). In many embodiments, a wireless communication device 100 (the client) is located within range of a first wireless network 102. The protocol of the first wireless network 102 may be any valid wireless protocol such as WLAN (Wireless Local Area Network), WiMAX (Worldwide Interoperability for Microwave Access), WWAN (Wireless Wide Area Network), or any other valid wireless network protocol. In many embodiments, the first wireless network 102 is broadcast by a wireless access point device 104 (Access Point 1 or AP1). In many other embodiments, AP 1 (104), although termed an "Access Point," is a Base Station (e.g. in WWAN and WiMAX networks) or another general "network access device" or location. Thus, in the description below, the "Access Point" terminology is utilized but should not be viewed as restrictive to WLAN Access Point technology alone.

AP1 (the host) is a device that connects one or more wireless communication devices together to form a wireless network. In many embodiments, AP1 (104) also connects to a wired network and is capable of relaying information between wireless devices and wired devices.

A RADIUS (Remote Authentication Dial In User Service) server 106 (RADIUS server 1) is connected to AP1 (104) through a wired network connection, in some embodiments. RADIUS server 1 (106) takes security credentials (such as usernames and passwords) that a user presents while attempting to connect wirelessly from a mobile device to the first wireless network 102 through AP1 (104). RADIUS server 1 (106) authenticates that the information is correct and, if so, allows the requesting device access to the wireless network. This process is commonly referred to as a 4-way handshake that results in a layer 2 (L2) network connection.

Additionally, a DHCP (Dynamic Host Configuration Protocol) server 108 (DHCP server 1) is also connected to AP1 (104) through a wired connection in some embodiments. DHCP server 1 (108) utilizes a set of rules to allow a mobile device to request and obtain an IP address (Internet protocol) from a list of addresses DHCP server 1 (108) has available for assignment. Thus, DHCP server 1 (108) allows the mobile device access to the Internet by administering the IP address. This process is commonly referred to as a DHCP request from the mobile device and a DHCP response from the access point that results in a layer 3 (L3) network connection.

In many embodiments, the mobile device 100 can connect to the Internet through wireless network 102 after going through this process with AP1 (104) and the RADIUS and DHCP servers connected to AP1.

Once this process has taken place and the mobile device 100 is operational within wireless network 1 (102), in many embodiments, the mobile device 100 moves into a location (location 110) where it now receives a signal from wireless network 2 (112) through Access Point 2 114 (AP2) in addition to the signal it is receiving from wireless network 1 (102). In this location 110, coverage for wireless network 1 (102) and wireless network 2 (112) overlap.

In many embodiments, network selection logic within the mobile device 100 determines which wireless network is the preferred network on which to operate. This process may be referred to as roaming. The logic may use any number of reasons including the signal strength of one network over another, the wireless protocol of one network may be superior, one network may be more secure than the other, or any other logical reason that may come up to determine which network is preferred while in the roaming state where more than one wireless network is available. In this example, the network selection logic within mobile device 100 determines that wireless network 2 (112) is the preferred network.

In many embodiments, AP (104) includes logic to maintain state information for mobile device 100 after mobile device 100 has left wireless network 1 (102). The state information AP1 (104) maintains may include the established IP address for the mobile device 100, the media access control (MAC) address for the mobile device 100, and possibly other state information specific to mobile device 100. AP1 (104) can define how long after the mobile device 100 disconnects with wireless network 1 (102) that it will maintain resources storing the mobile device's state information. In many embodiments, AP1 (104) stores a value corresponding with a predetermined length of time that mobile device state information is stored, after the mobile device 100 disconnects with the network, before the resources are released. AP1 (104) additionally includes a timer that will begin counting the time from which mobile device 100 disconnected from wireless network 1. In many embodiments, when the timer reaches the predetermined length of time, AP1 (104) releases the resources storing mobile device 100 state information.

At the point in time that mobile device 100 decides to transfer from wireless network 1 (102) to wireless network 2 (112), in some embodiments, mobile device 100 sends a Keep-State-Alive message to AP1 (104). The Keep-State-Alive message informs AP1 (104) that the mobile device 100 is requesting for AP1 (104) to store the mobile device state information after it disconnects with AP1 (104). The Keep-State-Alive message signals to AP1 (104) to start the timer related to storing the mobile device 100 state information.

Wireless device 100 also includes logic and storage to store state information related to wireless network 1 (102) in many embodiments. In different embodiments, the wireless network 1 (102) state information may include the IP address that mobile device 100 was assigned by DHCP server 1 (106) as well as various security and credential information assigned to mobile device 100 by RADIUS server 1 (108).

To gain access to wireless network 2 (112), the mobile device 100 goes through the same or a similar process to the process the mobile device 100 went through to gain access to wireless network 1 (102). Wireless network 2 (112) also has an associated protocol. The protocol of the wireless network 2 (112) may be any valid wireless protocol such as WLAN, WIMAX, WWAN, or any other valid wireless network protocol. In some embodiments, wireless network 2 (112) has the same protocol as wireless network 1 (102). In other embodiments, wireless network 2 (112) has a different protocol than wireless network 1 (102). In many embodiments, wireless network 2 (112) is broadcast by a second wireless access point device 114 (Access Point 2 or AP2). AP2 is a device that connects one or more wireless communication devices together to form a second wireless network. In many embodiments, AP2 (114) also connects to a wired network and is capable of relaying information between mobile devices and wired devices.

A second RADIUS server, RADIUS server 2 (116), and a second DHCP server, DHCP server 2 (118) are connected to AP2 (114) through a wired network connection, in some embodiments. The second RADIUS and DHCP servers operate similarly to their counterparts in wireless network 1 (102).

In many embodiments, the mobile device 100 can connect to the Internet through wireless network 112 after going through the L2 and L3 connections processes with AP2 (114) and the RADIUS and DHCP servers connected to AP2 (114). Thus, if the process between the mobile device 100 and AP2 (114) is successful, the mobile device would have established an L2 and an L3 connection with AP2 (114).

In some embodiments, once mobile device 100 is connected to wireless network 2 (112), the network selection logic within mobile device 100 determines that something regarding wireless network 2 is not desirable and attempts to reconnect with wireless network 1 (102). When mobile device 100 is located at or around location 110, this still would work because mobile device 100 is still in an area where wireless network 1 (102) and wireless network 2 (112) have overlapping coverage. In this scenario, the mobile device can send a Restore-State message to AP1 (104). The Restore-State message queries AP1 (104) whether AP1 has maintained the mobile device's state (the IP address, MAC address, and/or any other potential maintenance information), or whether the state maintenance timer has expired and AP1 (104) has released the resources to free up space in wireless network 1 (102). If AP1 (104) returns a Confirm-State-Restoration message to the mobile device 100, then the mobile device can reconnect with wireless network 1 (102) without going through the L2 and L3 connection steps again. Otherwise, AP1 (104) will send back a Failed-State-Restoration message to the mobile device 100 and then mobile device 100 will have to go through the L2 and L3 connection states again. If AP1 (104) returns the Confirm-State-Restoration message, the total time it takes the mobile device 100 to reconnect to wireless network 1 (102) is significantly smaller because the lengthy L2 and L3 connection steps are eliminated on the reconnect.

In many embodiments, AP1 (104) 1 broadcasts a beacon signal across wireless network 1 (102) at all times to any potential mobile devices in range. The beacon signal informs mobile devices that AP1 (104) is capable of maintaining a mobile device's state (State Maintenance signal) as well as how long AP1 (104) will maintain the state after the mobile device leaves the network (State Maintenance Time signal).

In some embodiments, the mobile device 100 also has a timer to maintain the state information of the wireless network such as the IP address that the mobile device was assigned by the DHCP server as well as various security and credential information assigned to the mobile device by the RADIUS server. The timer within the mobile device may just mimic the timer within the Access Point. This would allow the mobile device to keep track of how much longer its state information will be stored within the Access Point. Alternatively, the mobile device timer could also be utilized to free up resources within the mobile device once the timer expires.

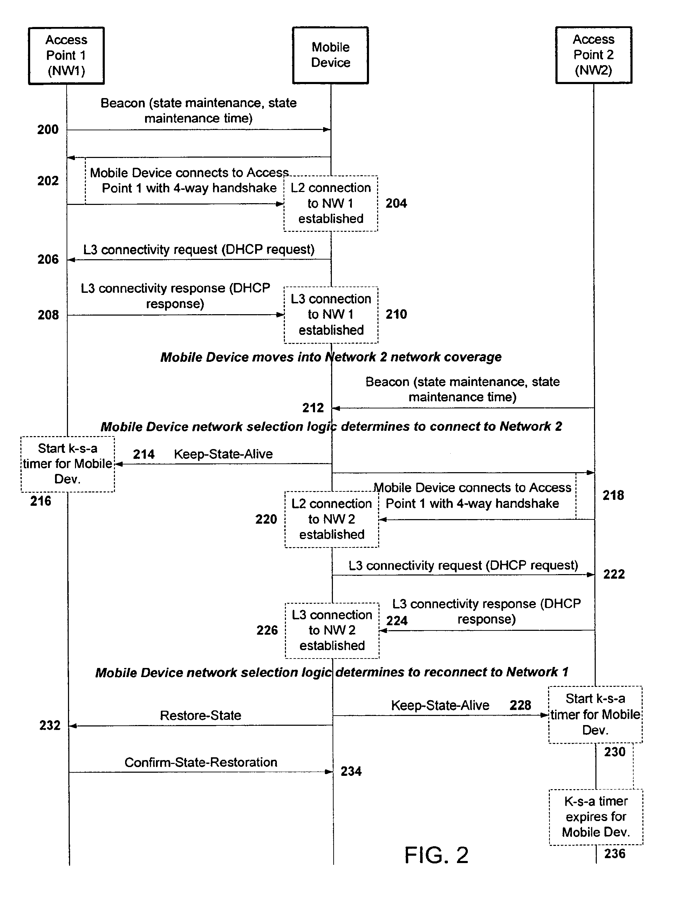

**Figure 2** is a flow diagram of one embodiment of a process to maintain client and host resources in a roaming environment with multiple wireless networks. The process is performed by processing logic that may comprise hardware (circuitry, dedicated logic, etc.), software (such as is run on a general purpose computer system, access point, mobile device, or another dedicated machine), or a combination of both. Referring to Figure 2, the process begins by processing logic within AP1 broadcasting a beacon signal that includes the State Maintenance ability information and the State Maintenance Time information to all mobile devices within range (process flow location 200).

Next, processing logic within the mobile device connects to Access Point 1 and initiates a 4-way handshake (process flow location 202). The result of the 4-way handshake between the mobile device and Access Point 1 is that an L2 connection to wireless network 1 (NW1) is established (process flow location 204). Then processing logic in the mobile device initiates a DHCP request to establish L3 connectivity with Access Point 1 (process flow location 206). Access Point 1 processes the DHCP request and responds with a DHCP response (process flow location 208), which establishes L3 connectivity between Access Point 1 and the mobile device (process flow location 210).

At some point the mobile device moves into Network 2 wireless network coverage while remaining within Network 1 wireless network coverage. Thus, the mobile device is in a coverage overlap area where both Network 1 and Network 2 have coverage and the mobile device is free to roam between the two wireless networks.

As soon as the mobile device has moved into range of Network 2, in some embodiments, the mobile device is able to receive the beacon signal Access Point 2 broadcasts that includes the State Maintenance ability information and the State Maintenance Time information to all mobile devices within range (process flow location 212). In other alternative embodiments, Network 2 does not have state maintenance ability so this beacon signal would not be broadcast (these alternative embodiments are not shown in Figure 2).

Returning to Figure 2, once the mobile device receives the beacon signal, in this example, the network selection logic within the mobile device determines to connect to Network 2. This determination can be made for any of a number of reasons explained above such as the signal strength of one network over another, the wireless protocol of one network may be superior, one network may be more secure than the other, or any other logical reason that may come up to determine which network is preferred while in the roaming state where more than one wireless network is available.

Thus, once the mobile device has determined to transition to Network 2, processing logic within the mobile device sends a Keep-State-Alive signal to Access Point 1 (process flow location 214), which in turn causes processing logic within Access Point 1 to start the Keep-State-Alive State Maintenance timer for the mobile device (process flow location 216). This State Maintenance timer, as described above, allows for the Access Point 1 to maintain the state of the mobile device within Access Point 1 until the timer runs out. The timer runs out once the timer reaches the State Maintenance Time value that is also stored within Access Point 1.

Next, processing logic within the mobile device connects to Access Point 2 and initiates a 4-way handshake (process flow location 218). The result of the 4-way handshake between the mobile device and Access Point 2 is that an L2 connection to wireless network 2 (NW2) is established (process flow location 220). Then processing logic in the mobile device initiates a DHCP request to establish L3 connectivity with Access Point 2 (process flow location 222). Access Point 2 processes the DHCP request and responds with a DHCP response (process flow location 224), which establishes L3 connectivity between Access Point 2 and the mobile device (process flow location 226).

In this example, at this time the network selection logic within the mobile device determines to reconnect to Network 1 because something regarding Network 2 is not desirable. In different embodiments, reasons for attempting to reconnect to Network 1 may include the Network 2 signal strength may have waned, load on Network 2 might have gone up, the Network 2 security parameters have changed, or any other potential modification to Network 2 that happened since the mobile device first received the beacon signal from Network 2. Additionally, it could also be the case that the change actually happened in Network 1. For example, the Network 1 signal strengthened or Network 1 invoked greater security parameters since the mobile device's network selection logic initially decided to connect to Network 2.

In some embodiments, when Network 2 also has State Maintenance ability, processing logic within the mobile device next sends a Keep-State-Alive message to Access Point 2 (process flow location 228), which in turn causes processing logic within Access Point 2 to start the Keep-State-Alive State Maintenance timer for the mobile device (process flow location 230). This State Maintenance timer, as described above, allows for the Access Point 2 to maintain the state of the mobile device within Access Point 1 until the timer runs out. The timer runs out once the timer reaches the State Maintenance Time value that is also stored within Access Point 2.

Next, processing logic within the mobile device sends a Restore-State message to Access Point 1 (process flow location 232) to attempt to have Access Point 1 reestablish the network connection between Network 1 and the mobile device using the State Maintenance information related to the Wireless Device (stored within the Access Point 1) and the State Maintenance information related to Access Point 1 (stored within the mobile device). If the Keep-State-Alive State Maintenance timer has not expired within Access Point 1, then processing logic within Access Point 1 will return a Confirm-State-Restoration message to the mobile device (process flow location 234), then the mobile device can reconnect with Network 1 without going through the L2 and L3 connection steps again. Otherwise, Access Point 1 will send back a Failed-State-Restoration message to the mobile device (this alternative result is not shown in Figure 2) and then the mobile device and Access Point 1 will have to go through the L2 and L3 connection states again.

Finally, in the scenario where the mobile device and Access Point 1 are able to reconnect and remain connected this time, the Keep-State-Alive State Maintenance timer within Access Point 2 will eventually expire so the resources allocated to storing the mobile device's state information within Access Point 2 may be freed up.

In some alternative embodiments, some or all of the processing logic and storage within Access Points 1 and 2 may be located within a RADIUS server, DHCP server, or other server or computing device connected to the Access Point, instead of actually within the Access Point itself. In these embodiments, the Access Point may act as a conduit and send information from the mobile device to the device storing the Access Point processing logic as well as send information from the device storing the Access Point processing logic to the mobile device.

Thus, embodiments of a method, apparatus, and system to reserve wireless network client and host resource information after the client has left the host's network are described. These embodiments have been described with reference to specific exemplary embodiments thereof. It will be evident to persons having the benefit of this disclosure that various modifications and changes may be made to these embodiments without departing from the broader spirit and scope of the embodiments described herein. The specification and drawings are, accordingly, to be regarded in an illustrative rather than a restrictive sense.

## Claims

1. A method, comprising:
granting a mobile device access to a network;
maintaining the mobile device state information on at least one network access device broadcasting the network, when the mobile device leaves the network;
maintaining network state information on the mobile device, when the mobile device leaves the network; and
restoring the mobile device access to the network using the mobile device state information and the network state information.

2. The method of claim 1, further comprising:
maintaining the mobile device state information for a predetermined amount of time after the mobile device leaves the network; and
maintaining the network state information for at least the predetermined amount of time after the mobile device leaves the network.

3. The method of claim 2, further comprising:
the mobile device sending a keep state alive message to the network access device prior to leaving the network; and
the network access device
receiving the keep state alive message from the mobile device;
starting a timer upon receipt of the keep state alive message; and
maintaining state information related to the mobile device until the timer
reaches the predetermined amount of time.

4. The method of claim 2, further comprising:
the mobile device sending a restore state message to the network access device; and
the network access device restoring the state of the mobile device in the network when receiving the restore state message from the mobile device prior to the timer reaching the predetermined amount of time.

5. The method of claim 1, wherein the network is a wireless network.

6. An apparatus, comprising:
a mobile device operable to
switch network access from a first network to a second network;
maintain state information related to the first network; and
switch access from the second network to the first network using the state
information to restore access to the first network.

7. The apparatus of claim 6, wherein the mobile device is further operable to maintain state information related to the first network for a predetermined amount of time after switching to the second network.

8. The apparatus of claim 7, wherein the mobile device is further operable to receive a beacon signal from the first network access device comprising capability information, wherein the capability information includes information informing the mobile device that the first network access device is capable of maintaining mobile device state information and that the first network access device will maintain the state information for the predetermined amount of time after the mobile device has left the first network.

9. The apparatus of claim 7, wherein the mobile device is further operable to:
send a keep state alive message to the first network access device prior to leaving the first network; and
start a timer upon sending the keep state alive message to the first network access device;
maintain state information related to the first network until the timer reaches the predetermined amount of time.

10. The apparatus of claim 9, wherein the mobile device is further operable to:
send a restore state message to the first network access device;
reacquire access to the first network using the maintained state information when the first network access device sends a confirmation of state restoration message to the mobile device in response to the restore state message; and
reacquire access to the first network using standard network access protocols when the first network access device sends a failure of state restoration message to the mobile device in response to the restore state message.

11. The apparatus of claim 6, wherein the first network and the second network have the same protocol.

12. The apparatus of claim 6, wherein the first network and the second network have different protocols.

13. The apparatus of claim 6, wherein the first network is a wireless network.

14. A system, comprising:
a network access device operable to
grant a mobile device access to a first network;
maintain mobile device state information after the mobile device leaves the first network;
restore the state of the mobile device in the first network, using the state information, when the mobile device requests its state restored in the first network; and
the mobile device, operable to
switch access from the first network to a second network;
maintain first network state information; and
switch access from the second network to the first network using the state
information to restore access to the first network.

15. The system of claim 14, wherein the network access device is further operable to maintain the mobile device state information for a predetermined amount of time after the mobile device leaves the network.

16. The system of claim 15, wherein the mobile device is further operable to:
send a keep state alive message to the network access device prior to leaving the first network.

17. The system of claim 16, wherein the network access device is further operable to:
receive the keep state alive message from the mobile device;
start a timer upon receipt of the keep state alive message; and
maintain state information related to the mobile device until the timer reaches the predetermined amount of time.

18. The system of claim 15, wherein the mobile device is further operable to:
send a restore state message to the network access device.

19. The system of claim 18, wherein the network access device is further operable to:
restore the state of the mobile device in the first network when receiving the restore state message from the mobile device prior to the timer reaching the predetermined amount of time.

20. The system of claim 14, wherein the first network and the second network have the same protocol.
